# EUROPEAN PATENT SPECIFICATION

(11) **EP 2 146 381 B1**
(45) Date of publication and mention of the grant of the patent: **22.02.2012**
(21) Application number: 09174478.9
(22) Date of filing: 18.10.2006
(51) Int. Cl.: H01L 31/048

(54) **Connecting device having a diode for connecting an electrical conductor to a connecting lead**
Anschlussvorrichtung mit einer Diode zum Anschließen eines elektrischen Leiters an eine Anschlussleitung
Dispositif de connexion doté d'une diode pour la connexion d'un conducteur électrique à un fil de connexion

(30) Priority: 20.10.2005 DE 102005050314
(43) Date of publication of application: 20.01.2010
(62) Divisional of application: 06021831.0
(73) Proprietor: Tyco Electronics AMP GmbH, 64625 Bensheim (DE)
(72) Inventor: Feldmeier, Günter, 64653 Lorsch (DE); Scherer, Heinz, 64625 Bensheim (DE); Woeber, Andreas, 69469 Weinheim (DE)
(74) Representative: Klunker . Schmitt-Nilson . Hirsch

(56) References cited:
- EP-A2- 1 102 354
- US-A1- 2003 193 322
- US-A1- 2004 177 987
- US-A1- 2004 261 835
- US-A1- 2005 054 219

## Description

The invention relates to a connection device for connecting at least one electrical conductor to at least one connecting lead, the connection device having an intermediate connection arrangement having at least one diode. A connection device of this type is configured in particular for the electrical connection of solar cells of a solar module.

US 2005/054219 discloses a connection device according to the preamble of claim 1.

A solar module for generating electrical energy typically comprises a layered arrangement having a planar first layer on an exposed side, for example a glass cover having a low level of absorption, and a planar second layer on a rear side, for example a glass cover. The individual solar cells, which contribute to generating electrical energy by a photovoltaic effect, are arranged between these layers and are interconnected inside the layered arrangement. The solar panel formed in this way is normally provided with a surrounding connector housing. In order to obtain higher voltages and currents, a plurality of the solar cells is combined into a solar module and is connected in series or parallel to each other.

In traditional solar modules, connecting foils are normally used to make contact with the rear sides of the solar cells, which are separate from the exposed side, said foils being connected to connecting leads, also known as solar leads, by means of a connection device in the form of a connection box. This connection is made, for example, by soldering, screwing or using clips that clamp a connecting foil onto a conductor rail.

Normally a connection device of this type for the electrical connection of solar cells of a solar module contains one or more diodes, which are provided to prevent equalization currents between solar cells lying in sunlight and solar cells lying in shadow, which supply different solar currents and solar voltages. The module can thereby continue to work even under partial shadowing and correspondingly reduced power. Such bypass diodes, as they are known, traditionally have a rounded configuration, which means that they can only have limited use, in particular for high powers. Comparatively high losses occur in the diode, in particular in the case of high powers, which have to be dissipated in the form of heat to the outside of the connection device. In a connection device of the type mentioned in the introduction, however, there is relatively poor dissipation of the generated waste heat in the case of a diode having a rounded configuration.

The object of the present invention is to define a connection device of the type mentioned in the introduction, which is suitable for connecting an electrical conductor, in particular of a solar module, to a connecting lead, even in the cases where high powers are to be carried.

The present invention achieves this object by creating a connection device of the type mentioned in claim 1, which can be produced by a method according to the features of claim 13, and a solar module according to claim 15 that is equipped with such a connection device. Advantageous embodiments and developments of the invention are given in the dependent claims.

The connection device according to the invention comprises a connector housing having at least one connecting-lead through-hole for the connecting lead, and having at least one conductor through-hole for the electrical conductor, plus an intermediate connection arrangement arranged in the connector housing having a first connection area for connecting the connecting lead and a second connection area for connecting the electrical conductor. The intermediate connection arrangement comprises a substrate arrangement having an electrical conductor structure and a thermal conduction structure and at least one diode. The diode is configured as a flat diode having two substantially flat opposing main faces. The diode is connected to the electrical conductor structure and is connected to the thermal conduction structure by at least one of its main faces. The electrical conductor structure is configured for the electrical connection of the first connection area and the second connection area, whereas the thermal conduction structure is configured to dissipate thermal energy from the diode.

Since according to the invention a thermal conduction structure, preferably having a large surface area, is provided, and the diode is configured as a flat diode and is connected efficiently to the thermal conduction structure by at least one of its main faces, substantially better dissipation of the waste heat generated in the diode is possible because a higher thermal conductivity for the diode is achieved inside the connection device. Hence the diode can take a higher thermal load, so that even higher electrical powers can be carried in the connection device from the electrical conductor to the connecting lead.

According to one embodiment of the present invention, an encapsulation material enclosing the diode is provided and arranged in such a way that it makes contact with the diode and absorbs thermal energy from the diode. For example, the encapsulation material may encapsulate the diode, for example, after being arranged on the substrate arrangement. The encapsulation material is in particular a thermoplastic polymer. Using such an arrangement, it is possible to increase the amount of emitted heat to be dissipated from the diode, because the encapsulation material can absorb additional heat output, and release it to an outside of the connector housing. In addition, the heat capacity is increased, so that the dynamic performance is improved, because momentarily high levels of emitted heat can be absorbed. A further advantage is that by using the encapsulation material, an optional transition to a metal thermal conduction structure, for example, can be created, so that the overall thermal conductivity is increased. In addition, contact to the diode is made over a larger surface area, which also increases the dissipated thermal energy.

According to a further embodiment of the invention, the substrate arrangement has a plate configuration. According to a first aspect of the invention, the substrate arrangement comprises in particular a printed circuit board, the electrical conductor structure comprising tracks applied to the printed circuit board. The diode can be mounted directly on the printed circuit board in this case, being connected to one of the tracks over a planar surface, for example. According to a further aspect of the invention, the substrate arrangement comprises in particular a punched grid having a plurality of mutually separate punched-grid members. In this case, the diode can again be connected over a planar surface to one of the punched-grid members, allowing optimal heat transfer from the diode to the substrate arrangement. According to these embodiments, the electrical conductor structure also forms at least part of the thermal conduction structure, because a good part of the waste heat from the diode is dissipated via the metal surfaces of the electrical conductor structure by heat transfer and heat transmission over a planar surface.

According to another aspect of the present invention, the thermal conduction structure is arranged separately from the substrate arrangement. For example, the thermal conduction structure is configured as a metal plate, which is embedded in the encapsulation material beside the substrate arrangement for instance. For example, the diode and the encapsulation material enclosing the diode are arranged on the substrate arrangement, with at least part of the thermal conduction structure, which is arranged separately from the substrate arrangement, possibly in the form of a metallic plate, being embedded in the encapsulation material. The thermal conductivity is increased in this way, because additional thermal energy from the diode can be dissipated via the encapsulation material and the separate member of the thermal conduction structure.

According to a further embodiment of the invention, the thermal conduction structure is arranged on at least two different sides of the substrate arrangement, for example in the form of a printed circuit board, forming a first partial thermal conduction structure on a first side of the substrate arrangement, and a second partial thermal conduction structure on a second side of the substrate arrangement, for example the rear side of the printed circuit board. Here the diode is connected to the first partial thermal conduction structure, for example on the front side of the printed circuit board. The thermal conduction structure has a plated-through hole through the substrate arrangement in order to connect the first partial thermal conduction structure to the second partial thermal conduction structure. The thermal energy emitted by the diode can thereby be conducted onto the front side and rear side of a printed circuit board, for example, so that the surface of the thermal conduction structure can be effectively enlarged, whereby the thermal conductivity of the thermal conduction structure is also increased. The thermal energy of the diode can also be emitted over the larger surface area of the thermal conduction structure.

According to a further embodiment of the invention, the thermal conduction structure is connected to one or more external heat sinks for dissipating thermal energy to outside the connector housing. In the connection device according to the invention, the thermal conduction structure is arranged in the connector housing, which has at least one thermal-conduction through-hole in the connector housing. A thermal conductor, which is connected to the thermal conduction structure, can be fed through the thermal-conduction through-hole to dissipate the thermal energy of the diode to an outside the connector housing. This thermal conductor can be configured as an external heat sink, for example, or connected to such a device. The thermal energy of the diode can thereby also be dissipated effectively to outside the connector housing, so that higher electrical powers can be transferred in the connector housing.

In one embodiment of the invention, a plurality of diodes can be provided in the connector housing, which are connected to the electrical conductor structure, and to the thermal conduction structure via one of their main faces. Here, at least two of the diodes are arranged mutually offset in a plane of the intermediate connection arrangement, increasing the distance between the diodes in order to reduce a mutual thermal effect between the diodes.

In order to manufacture a connection device as described above, the diode is mounted on the intermediate connection arrangement, it is then enclosed in an encapsulation material and the intermediate connection arrangement so formed inserted in the connector housing.

For the case where a punched grid is used as the substrate arrangement, the following procedure is used according to one embodiment of such a manufacturing method: to create the substrate arrangement, a punched grid having a plurality of punched-grid members, initially interconnected by connecting webs, is formed from a metal strip. The punched-grid members of the punched grid are thereby kept together for the subsequent manufacturing steps. After mounting the diode and applying the encapsulation material to the intermediate connection arrangement, the connecting webs are cut through, where the intermediate connection arrangement is now held together by the encapsulation material and can be inserted in the connector housing in this form.

According to a further aspect of the present invention, a solar module is equipped with a connection arrangement as described here. In this case, the first connection area of the connection device is connected to a connecting lead for external connection of the solar module, while the second connection area of the connection device is connected to an electrical contact-making area of at least one solar cell of the solar module. For example, the connection device is attached to the rear side of the rear protective plate of the solar module.

The invention is described in more detail below with reference to the figures shown in the drawings illustrating embodiments of the present invention, in which
Fig. 1 is a schematic side view of an embodiment of a solar module that is provided with a connection device according to the invention,
Fig. 2 is a perspective view of a first embodiment of a connection device according to the invention having a printed circuit board as a substrate arrangement,
Fig. 3 is a detailed, perspective view of an intermediate connection arrangement of the embodiment of a connection device shown in Fig. 2,
Fig. 4 is a perspective view of an embodiment of a rear side of an intermediate connection arrangement,
Figs. 5 shows a further embodiment of an intermediate connection arrangement having a punched grid as a substrate arrangement for use in another embodiment of a connection device according to the invention,
Fig. 6 is a perspective view of the intermediate connection arrangement of Fig. 5 having an encapsulation material applied thereto,
Fig. 7 shows various views of the intermediate connection arrangement of Figs. 5 and 6 after encapsulation in an encapsulation material and after cutting through the connecting webs of the punched grid,
Figs. 8, 9 show a further embodiment of an intermediate connection arrangement having a punched grid in various phases of manufacture,
Fig. 10 is a detailed, perspective view, partially in cross-section, of a further embodiment of a connection device according to the invention,
Fig. 11 is a perspective view of a further embodiment of a connection device according to the invention having an external heat sink,
Fig. 12 shows the embodiment of Fig. 11 with a closed connector housing cover.

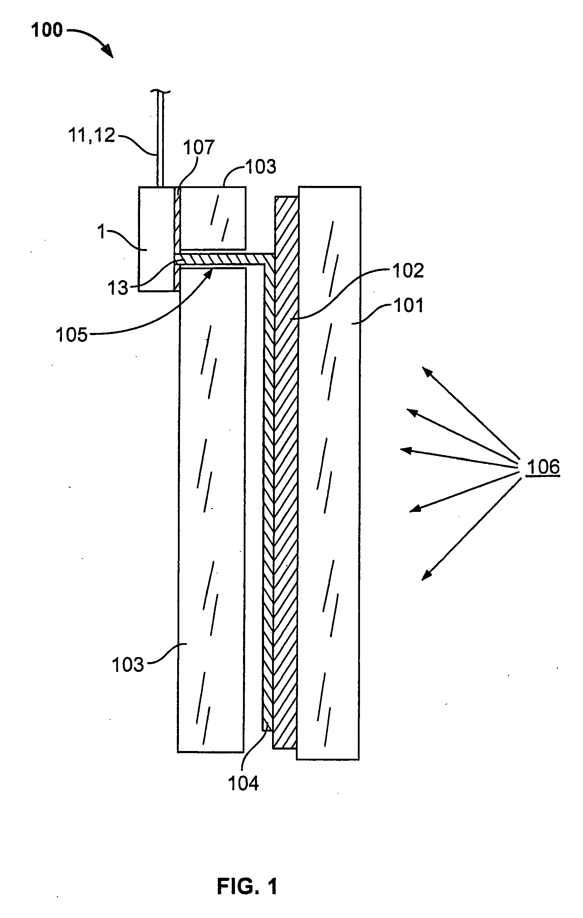

Fig. 1 is a schematic side view, not to scale, of an embodiment of a solar module 100 that is provided with a connection device 1 according to the invention. The solar module 100 comprises a layered arrangement having a planar first layer 101 on an exposed side in the form of a glass plate and a planar second layer 103. The second layer 103 can also be made of glass or of a protective film. At least one solar cell 102 is located between the first and second layers 101 and 103, which supplies electrical energy when exposed to light, for example sunlight, indicated by light rays 106. This energy is taken away from the solar cell 102 by means of a conductor foil 104, usually in the form of a copper foil that forms a conductor pattern. For this purpose, the conductor foil 104 is electrically connected on one side to an unexposed, rear side of the solar cell 102, and on the other side, via an electrical conductor 13, to the connection device 1, from which the solar-cell energy is taken out to a load, which is not shown in Fig. 1, by means of connecting leads 11, 12.

According to the present embodiment, the connection device 1 is attached to a rear side of the second layer 103, for example by means of adhesive 107 such as glue. In addition, the second layer 103 is provided with one or more of the through-holes 105, through which one or more electrical conductors 13, for example in the form of foil conductors, can be fed from the rear side of the solar cell 102 to the connection device 1.

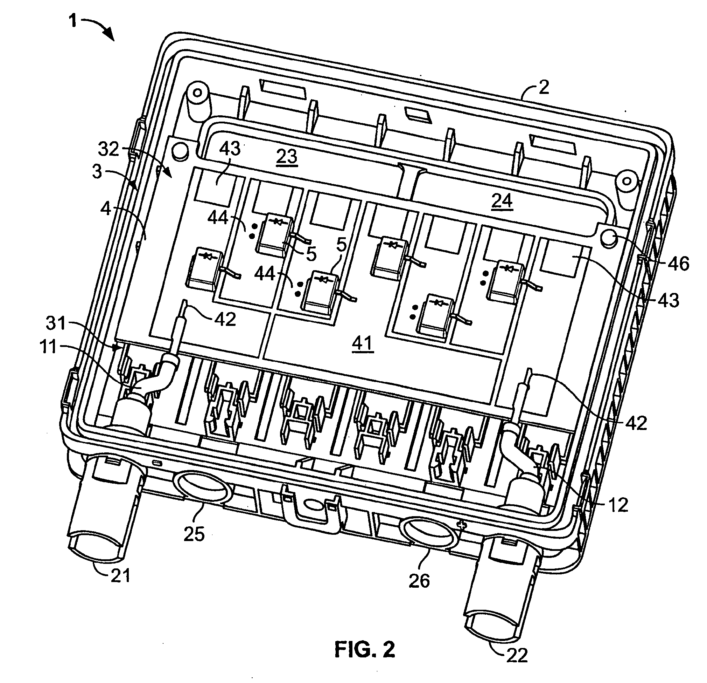

Fig. 2 shows a first embodiment of a connection device 1 according to the invention, which can be used in particular for connecting the solar module 100. The connection device 1 shown in Fig. 2 comprises a connector housing 2, in the present embodiment having two connecting-lead through-holes 21 and 22 for the connecting leads 11 and 12, which are fed out via the connecting-lead through-holes 21 and 22. This can be accomplished, for example, by a suitably configured connector in each case. An electrical conductor 13, such as the electrical foil conductor of the solar module 100 shown in Fig. 1, is guided via a conductor through-hole 23, 24 into an interior of the connector housing 2. In the present embodiment, two of the conductor through-holes 23, 24 are provided in the form of a respective slot, in order to introduce a plurality of the electrical conductors 13 into the interior of the connector housing 2. The electrical conductors 13 introduced through the conductor through-holes 23, 24 are not shown in Fig. 2.

An intermediate connection arrangement 3 is additionally provided in the interior of the connector housing 2, comprising a first connection area 31 for connecting the connecting leads 11, 12, and a second connection area 32 for connecting the electrical conductors 13, which are fed out of the solar module 100 shown in Fig. 1. In the embodiment shown in Fig. 2, the intermediate connection arrangement 3 comprises a substrate arrangement in the form of a printed circuit board 4, which comprises electrical conductor structures or tracks 41 applied to the printed circuit board 4 to create an electrical conductor structure. In the first connection area 31, electrical terminals 42 are provided on the printed circuit board, which are configured as plug-in tongues in the present example. A corresponding plug-in termination of the connecting leads 11 and 12 in the form of a cable lug is pushed onto the electrical terminals 42.

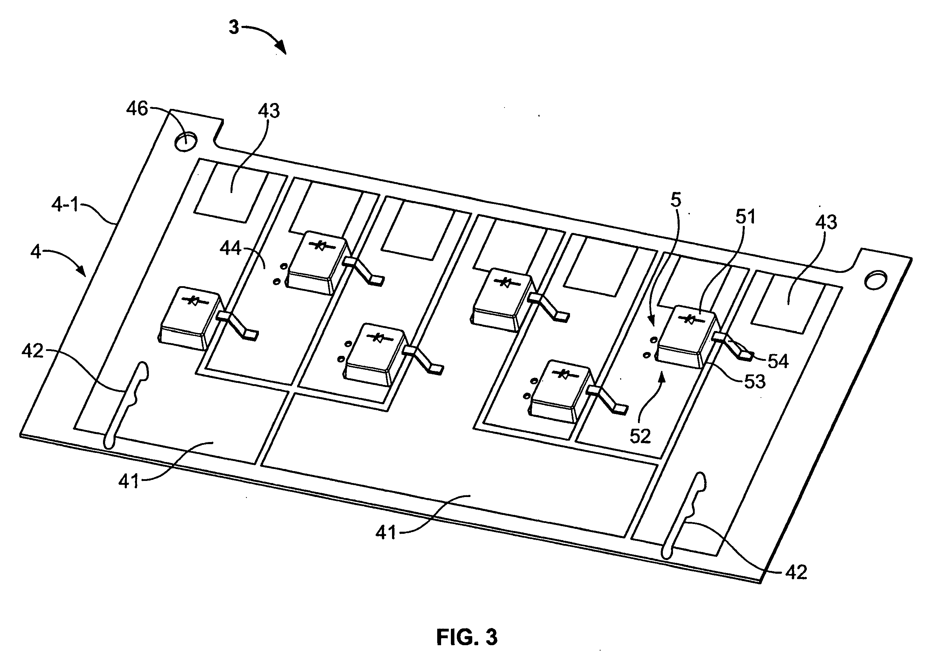

In the second connection area 32, the printed circuit board 4 comprises respective dimensionally stable planar conductors 43, which are configured to provide a flat contact surface for respective foil-type connection areas of the inserted electrical conductors 13. The foil-type connection areas, which are not shown in Fig. 2 for the sake of clarity, are placed on the planar conductors 43 and are, for example, soldered thereto. The printed circuit board 4 can be fixed to the connector housing 2 via a fixing device 46 (Fig. 3), for example in the form of an opening in the printed circuit board 4 penetrated by a corresponding screw fixed in the connector housing 2. In the present embodiment of the connector housing 2, further housing structures are indicated below the printed circuit board 4, which perform no essential function with regard to the present invention, but which are provided in the connector housing 2 so that the connector housing 2 can be used for other applications. For example, the structures can be used for a different application of the connector housing 2 to implement a different intermediate connection arrangement in which the printed circuit board 4 is not used.

As shown in Fig. 2, a plurality of diodes 5 configured as flat diodes are mounted on the printed circuit board 4 or more precisely on the tracks 41. Fig. 3 shows a detailed, perspective view of the intermediate connection arrangement 3 shown in Fig. 2. As shown in Fig. 3, the diodes 5 have two substantially flat opposing main faces 51 and 52. One of the main faces 51 forms a visible top side of the diode 5, and the other of the main faces 52 forms a non-visible underside of the diode 5. The main faces 51 and 52 are joined together by respective side faces 53, so that the main faces 51, 52 and side faces 53 form a diode 5 that is substantially cuboid in shape in the present embodiment. The main faces 51 and 52 are significantly larger than the side faces 53. A flat configuration of a diode 5 is obtained in this manner, which is also referred to as a "flat diode".

The diodes 5 are connected via a respective lead 54 to the tracks 41 of the printed circuit board 4, in the present case to the track 41 adjacent to the respective diode 5. A second electrical connection to the track 41 is made via a second lead (not shown) to the underside of the diode 5. The track 41 on which one of the diodes 5 lies, is connected in this way to an adjacent track 41 via the corresponding diode 5.

In the present embodiment, a plurality of diodes 5 of similar type are provided on the front side of the printed circuit board 4, and are connected to the tracks 41 of the printed circuit board 4. In this case, the diodes 5 are arranged mutually offset in a plane of the printed circuit board 4 (for example, diagonally offset from transverse and longitudinal axes of the printed circuit board 4) so as to increase the distance between the diodes 5 in order to reduce the thermal effect of the diodes 5. In an alternate embodiment, however, it would also be possible to arrange the diodes 5 side-by-side in a row (for example, along the longitudinal axis of the printed circuit board 4).

In the connection arrangement shown in Fig. 3, the tracks 41 are interconnected in series via the diodes 5. Such a circuit is used in particular in the case where the individual solar cells 102 of the solar module 100 are interconnected into a solar-cell circuit, for example into a serial connection of the individual solar cells 102. In this case, the solar-cell circuit is connected at individual, different circuit nodes to the respective planar conductors 43 of the second connection area 32 of the intermediate connection arrangement 3. Pairs of circuit nodes of the solar-cell circuit are thereby interconnected via the diode 5. The diodes 5 hence act as respective bypass diodes, which divert a current past an assigned group of the solar cells 102 of the solar module 100 when one or more of the solar cells 102 of a corresponding group are not contributing, or only to a limited extent, to generating electrical energy, for example when there is partial shadowing.

The tracks 41 of the printed circuit board 4 performs two main functions in the present embodiment. First, the tracks 41 are used for the electrical connection of the first connection area 31 and the second connection area 32 of the intermediate connection arrangement 3 via the respective diodes 5. Second, the tracks 41 are also used as a thermal conduction structure for dissipating thermal energy from the diode 5, which is produced as waste heat in the respective diodes. Good heat transfer to the underlying track 41 exists via the comparatively large area of the main face 52 of the diode 5, the track 41 having a comparatively large surface area for emitting to the surroundings the heat absorbed from the respective diodes. The large area of the metal tracks 41 act as thermal conductors, which in turn can dissipate the absorbed heat via an encapsulation material, for example, which is not shown in Figs. 2 and 3.

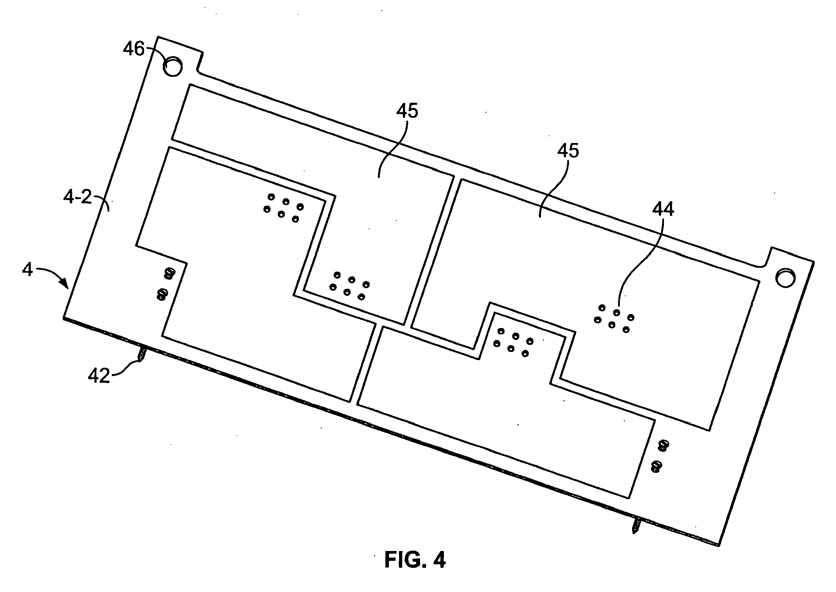

Fig. 4 shows a perspective view of a rear side 4-2 of a printed circuit board 4, on whose front side 4-1 are mounted diodes 5, as described with reference to Figs. 2 and 3. The rear side 4-2 of the printed circuit board 4 has tracks 45, which are not interconnected on the rear side 4-2. The tracks 45 essentially perform a function as a thermal conduction structure, which is connected to the tracks 41 on the front side 4-1 of the printed circuit board 4 via respective plated-through holes 44. Hence two partial thermal conduction structures are formed on front and rear sides 4-1 and 4-2 of the printed circuit board 4 in the form of the tracks 41 and 45, which are interconnected through the printed circuit board 4 by the plated-through holes 44. By this means, the surface area of the tracks 41 can also be extended onto the rear side 4-2 of the printed circuit board 4, so that the surface area is increased for improved dissipation of thermal energy from the diodes 5.

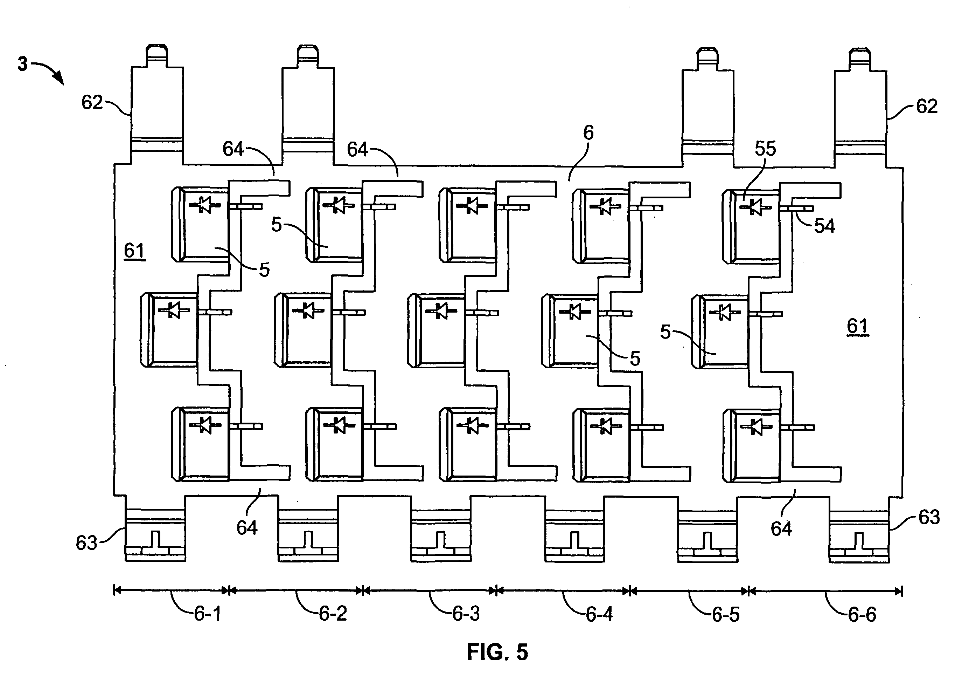

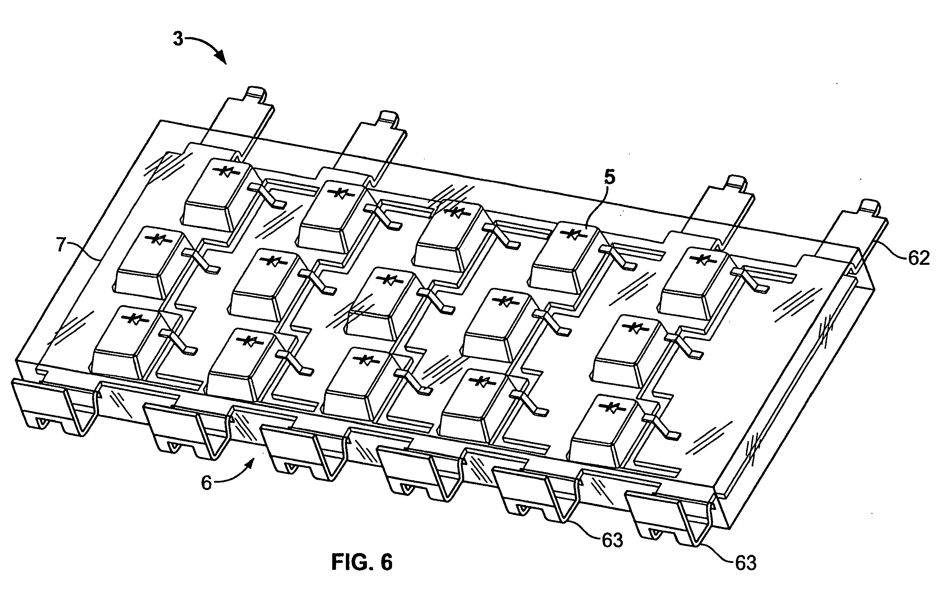

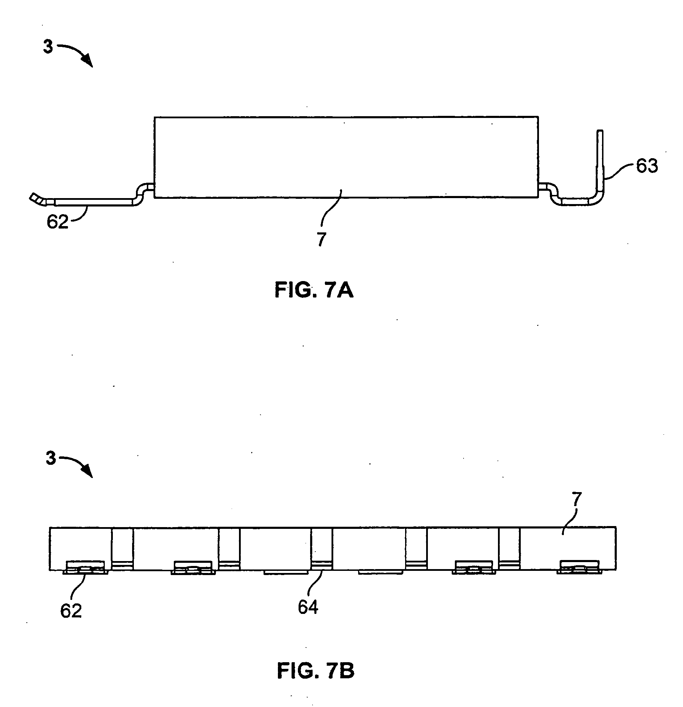

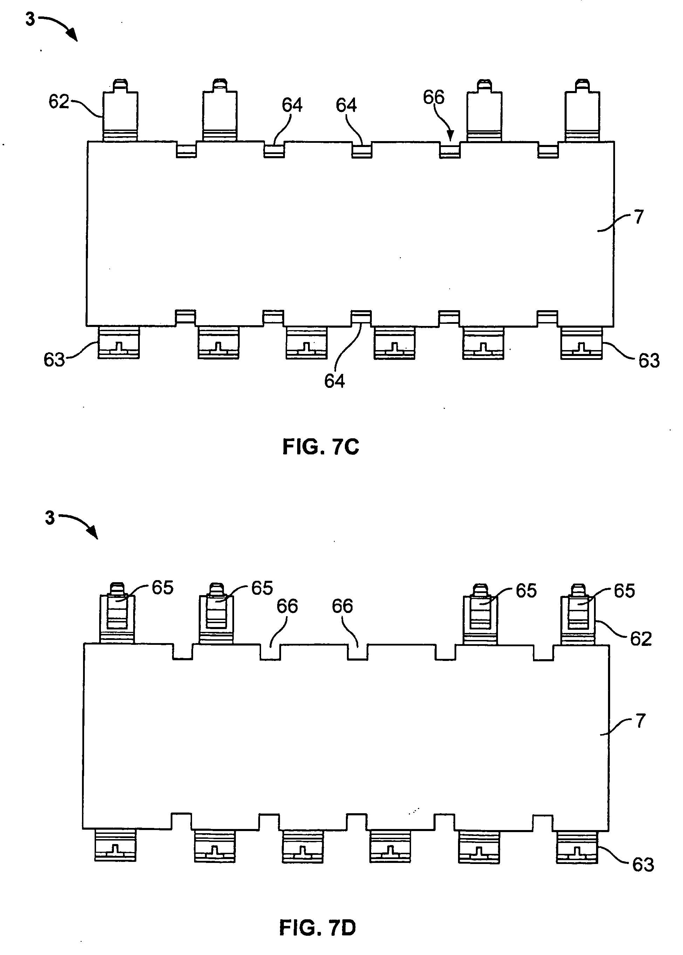

Fig. 5 shows a further embodiment of an intermediate connection arrangement 3 for arranging in a connection device 1, in which a punched grid 6 is used as the substrate arrangement. A manufacturing stage is shown in Fig. 5, in which the individual punched-grid members 6-1 to 6-6 of the punched grid 6 are still interconnected via respective connecting webs 64. The individual punched-grid members 6-1 to 6-6 each have tracks 61 that act as the electrical conductor structure. In addition, dimensionally stable flat conductors 63 are provided, each of which act as a flat contact surface for a foil-type connection area of the electrical conductor 13, for example the electrical conductor 13 of the solar module 100 shown in Fig. 1. The flat conductors 63 are bent upwards for example (Fig. 6; Fig. 7a), the foil-type connection areas being connected via a respective spring clip to the flat conductors 63. In the present embodiment, unlike the embodiment shown in Figs. 2 and 3, six of the flat conductors 63 are provided for connection to the solar module 100. Electrical terminals 62 are provided on an opposite side of the punched grid 6 to connect the intermediate connection arrangement 3 to connecting leads 11, 12. The terminals 62 are provided, for example, with spring cage clamps 65 (Fig. 7d), for clamping a wire of a respective connecting lead 11, 12. In Fig. 5, unlike the embodiment shown in Figs. 2 and 3, four of the terminals 62 are provided for connection of the connecting leads 11, 12.

A plurality of diodes 5 are mounted on the punched grid 6 in the manner already described with reference to Figs. 2 and 3. The diodes 5 are connected to the two adjacent punched-grid members 6-1 to 6-6 via respective leads 54 and 55. The interconnection of the individual punched-grid members 6-1 to 6-6 of the punched grid 6 is hence similar to the interconnection of the tracks 41 of the printed circuit board 4 shown in Figs. 2 and 3, although in the embodiment shown in Fig. 5, three of the diodes 5 are connected in parallel with each other. It would also be possible to connect more than or fewer than three of the diodes 5 in parallel with each other.

Fig. 6 shows a perspective view of the intermediate connection arrangement 3 of Fig. 5, in which, after mounting the diodes 5 on the punched grid 6, an encapsulation material 7 is applied to the substrate arrangement. Encapsulation material 7 encloses the respective diodes 5 in such a way that the encapsulation material 7 makes contact with the diodes 5 and absorbs thermal energy therefrom. For example, the substrate arrangement is encapsulated or injection molded with the encapsulation material 7 in the form of a thermoplastic polymer, forming what is known as a thermal overmolding. For example, the product THERMELT from the company Werner Wirth GmbH, Germany may be used as the encapsulation material 7. Improved dissipation of the heat from the diodes 5 to the surroundings can be achieved by using such a thermal overmolding. In this case, the large area of the punched-grid members 6-1 to 6-6 (Fig. 5) also act as a thermal conduction structure, which emit the generated heat to the encapsulation material 7 via the respective tracks 61.

Figs. 7A-7D show various views of the intermediate connection arrangement 3 of Figs. 5 and 6 during different phases of manufacture. Fig. 7A shows a side view of the intermediate connection arrangement 3 after encapsulating the punched grid 6 in the encapsulation material 7 to form an encapsulation body that is substantially cuboid in shape, as shown to some extent in Fig. 6. Fig. 7C shows a plan view of the intermediate connection arrangement 3, in which the punched grid 6 is encapsulated substantially completely in the encapsulation material 7, with the connecting webs 64 of the punched grid 6 (Fig. 5) still remaining at openings 66. Fig. 7B shows a corresponding side view of the intermediate connection arrangement 3, rotated through 90° compared with the side view of Fig. 7A.

The manufacture of the connecting device 1 according to the invention is described in more detail below.

In order to create the substrate arrangement, the punched grid 6 having the plurality of punched-grid members 6-1 to 6-6, as shown in Fig. 5, is formed from a metal strip. The punched-grid members 6-1 to 6-6 of the punched grid 6 are interconnected initially by the connecting webs 64. For example, a suitable metal strip passes through a punching machine which is used to form the punched-grid members 6-1 to 6-6. Then, the diodes 5 are mounted on the punched grid 6, for example by soldering, with the connecting webs 64 initially still left intact. Then, the intermediate connection arrangement 3 formed in this way is inserted in a molding tool, for example in an casting mold or injection-molding mold, in order to apply the encapsulation material 7. Here the openings 66 are formed so that the connecting webs 64 are externally accessible after creating the final cast shaped body. Then, the connecting webs 64 are severed by a suitable tool (not shown) so that the intermediate connection arrangement 3 is produced, as shown in Fig. 7D. This figure shows that the connecting webs 64 have been punched out of the openings 66. In addition, the spring cage clamps 65 attached to the terminals 62 can be seen in this view. The intermediate connection arrangement 3 formed in this way is then inserted in the connector housing 2 shown in Fig. 2 in order to connect the connecting leads 11, 12 or the electrical conductors 13 of the solar module 100. Then, the intermediate connection arrangement 3 is fixed to the connector housing 2.

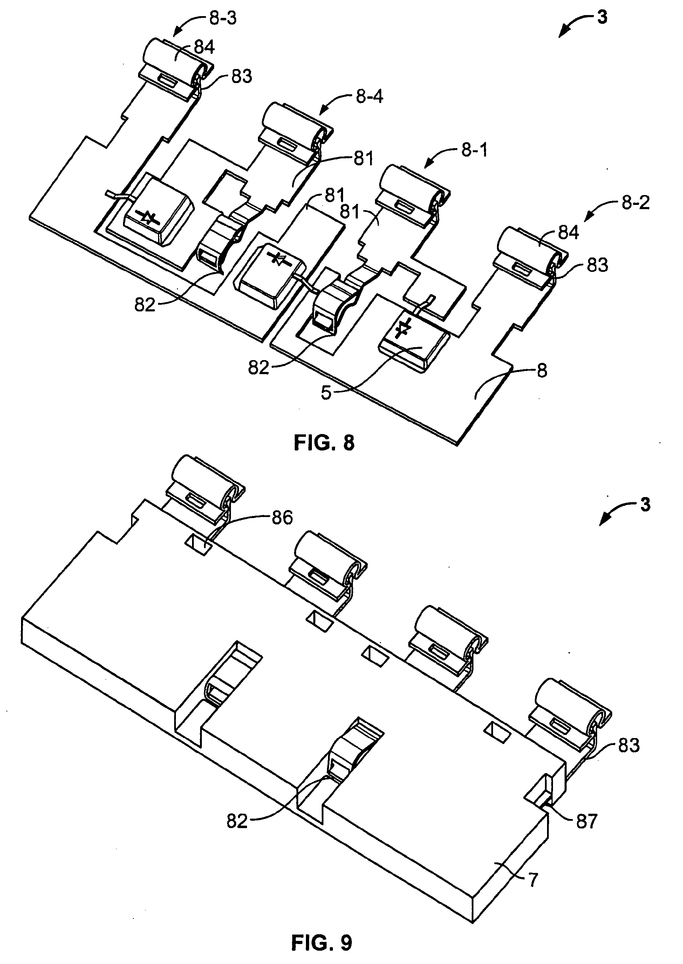

Figs. 8 and 9 show a further embodiment of the intermediate connection arrangement 3 having a punched grid 8 as a substrate arrangement in various phases of manufacture. The punched grid 8 comprises a plurality of punched-grid members 8-1 to 8-4, forming a conductor structure having various separate tracks 81. Diodes 5 are mounted on a number of the punched-grid members 8-1 to 8-4 by one of their main faces. Dimensionally stable flat conductors 83 act as a flat contact surface for foil-type connection areas of the electrical conductor 13, for example of the solar module 100, the connecting foils being clamped by a respective spring clip 84, for instance in the form of permanently elastic stainless steel springs. The spring clips 84 can also be used in the embodiment shown in Figs. 5 to 7D. The connecting leads 11, 12 emanating from the connection device 1 are connected to terminals 82. After soldering the diodes 5 onto the punched grid 8, the intermediate connection arrangement 3 formed in this way is encapsulated by an encapsulation material 7, with connecting webs of the stamped grid that still remain being punched out through the openings 86. The intermediate connection arrangement 3 can be fixed in the connector housing 2 at the openings 87. Unlike the previous embodiments, a systematic, series-type interconnection is not implemented by the punched grid 8, for example to allow the connecting foils to be interconnected in different ways on the solar module side. Hence the diode wiring can vary in form (variable track pattern), to allow different requirements on the solar module side to be taken into account.

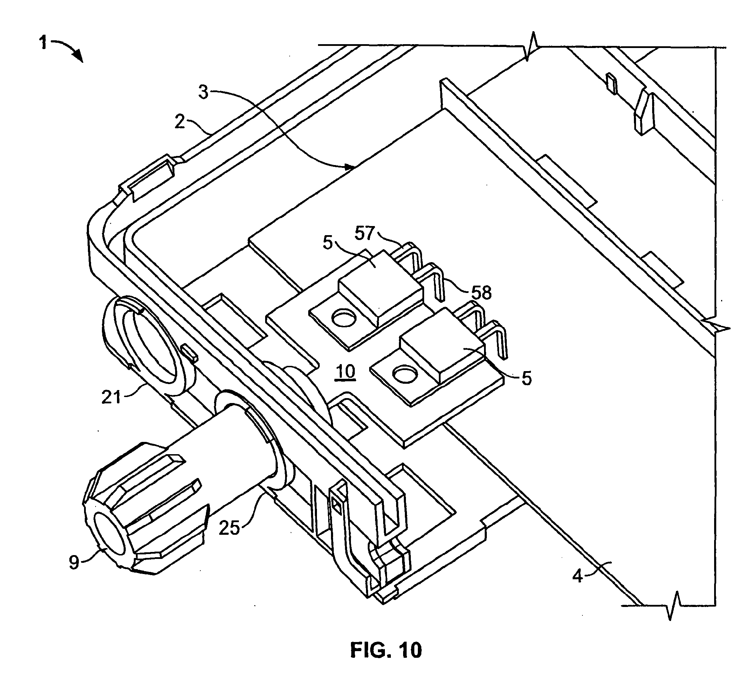

Fig. 10 shows a detailed, perspective view, partially in cross-section, of a further embodiment of the connection device 1 according to the invention. Unlike the embodiments of the connection device 1 described above, in the connection device 1 or the intermediate connection arrangement 3 of Fig. 10, the thermal conduction structure and the substrate arrangement 4 having the electrical conductor structure are arranged separately from each other. According to the embodiment of Fig. 10, the thermal conduction structure is configured as a thermally conducting, planar, preferably metal plate 10, on which the diodes 5 are mounted on a planar surface by one of their main faces to provide optimal heat transfer. The diodes 5 are connected to the electrical conductor structure on the substrate arrangement 4 leads 57 and 58, where the electrical conductor structure is not shown in more detail in Fig. 10. This has a similar configuration, for example, to the printed circuit board 4 shown in Figs. 2 and 3.

The arrangement of the metal plate 10, diodes 5 and substrate arrangement 4 shown in Fig. 10 can again be embedded in the encapsulating material, similar to Figs. 6 and 7A-7D.

The metal plate 10 having the diodes 5 mounted thereon and arranged in the connector housing 2 is connected to a heat sink. A thermal-conduction through-hole 25 is provided for this purpose in the connector housing 2 for the passage of a thermal conductor 9, which is connected to the metal plate 10. The thermal conductor 9 doubles as an external heat sink having attached ribs to increase the surface area, in order to improve dissipation of the thermal energy of the diodes 5 to an outside the connector housing 2. The thermal-conduction through-hole 25 is an opening in the connector housing 2 similar to the connecting-lead through-hole 21, for example, which could also be used alternatively in another application as an extra connecting-lead through-hole. As shown in particular with reference to Fig. 2, a further hole 26 is provided on the right-hand side of the connector housing 2, which again can serve as a thermal-conduction through-hole for an additional metal plate. The remaining diodes 5 can be arranged on this additional metal plate, so that a multiplicity of the diodes 5 can also be arranged in the connector housing 2 in this embodiment.

The thermal conductor 9 in the form of a heat sink, which is not an electrical conductor, is preferably implemented in plastic to achieve optimal thermal conductivity to the outside of the connector housing 2 and so that no electrically conducting members of the second connection arrangement 3 are accessible outside of the connector housing 2.

In an alternative embodiment, it is also possible to mount the diodes 5 on the printed circuit board 4 as shown in Figs. 2 and 3, and to provide the metal plate 10 as an additional part of the thermal conduction structure. In this case, the diodes 5 on the printed circuit board 4 are enclosed by the encapsulation material 7, similar to Figs. 6 and 7, the metal plate 10 also being embedded in the encapsulation material 7. Heat is thereby transferred from the diodes 5 or the printed circuit board 4 via the encapsulation material 7 to the metal plate 10, which in turn is connected to the thermal conductor, similar to the thermal conductor 9 or heat sink shown in Fig. 10. Hence, heat from the diodes 5 is dissipated to the outside of the connector housing 2 via the encapsulation material 7 and the metal plate 10.

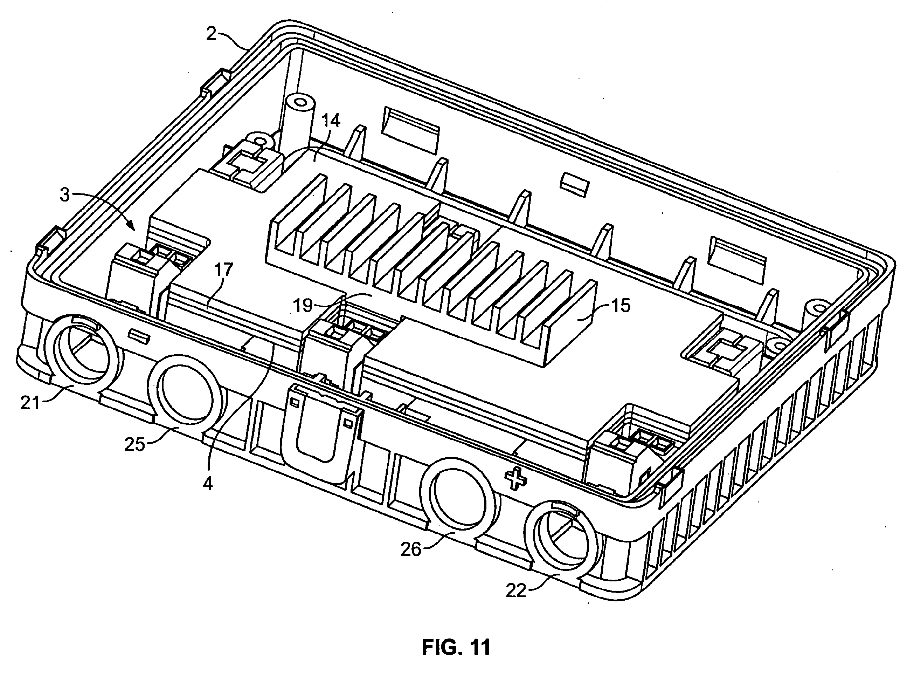

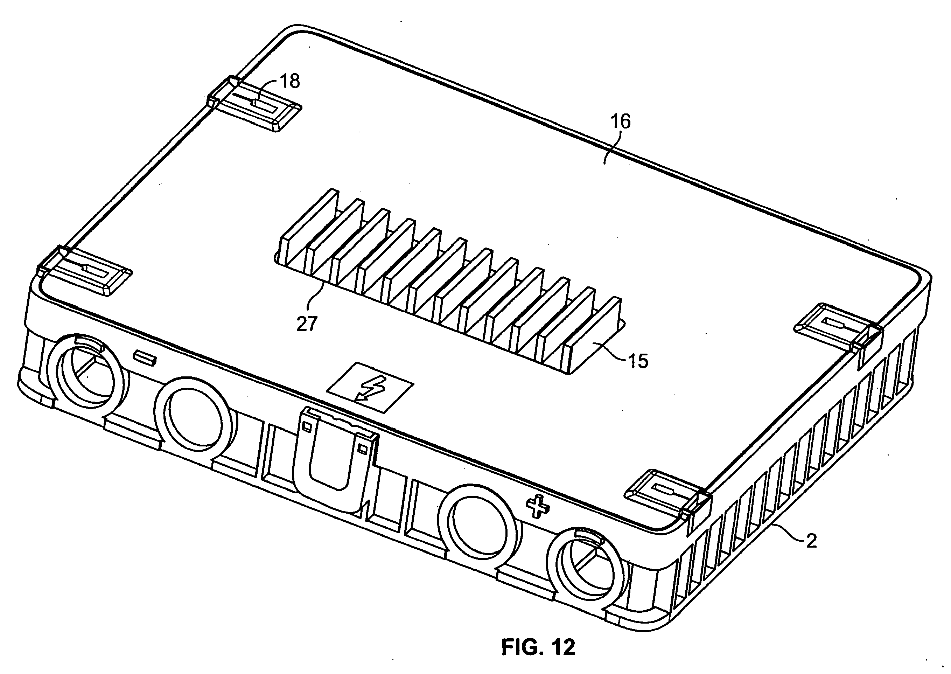

Figs. 11 and 12 show a further embodiment of the connection arrangement 3 according to the invention. In this embodiment, as in the embodiment of Fig. 10, the thermal conduction structure is connected to one or more external heat sinks, in this case a heat sink 15, to dissipate the thermal energy to the outside of the connector housing 2. In this case the heat sink 15 is advantageously implemented as a ribbed body in order to create as large a cooling surface area as possible for dissipating the generated heat.

In a further embodiment, the thermal conduction structure comprises a plate 14, for example an anodized aluminum plate, which covers the intermediate connection arrangement 3 at least partially, preferably substantially completely, and which is connected to the external heat sink 15 at a central feedthrough. For example, the plate 14 and the heat sink 15 may be a common component, the sub-area of the plate 14 being arranged inside the connector housing 2, and the sub-area of the heat sink 15 being arranged outside the connector housing 2. The plate 14 absorbs thermal energy from the intermediate connection arrangement 3 via a lower surface, and emits the thermal energy via the external heat sink 15.

In the embodiment of Fig. 11, a layer 17 is arranged between the substrate arrangement, for instance in the form of the printed circuit board 4, and the plate 14. The layer 17 is a non-electrically conductive heat conducting paste. The layer 17 is used in particular to fill up a potentially rough surface of the printed circuit board 4, so that a smooth surface and a flat support is produced for the plate 14. The thermal resistance can thereby be minimized, because contact can be made over an almost completely flat surface. Alternatively, the layer 17 can be a heat-conducting pad, which has a harder consistency than the heat-conducting paste and can be used to smooth out less sharp areas of unevenness on the printed circuit board 4. In one embodiment, the diodes 5 in this intermediate connection arrangement 3 are arranged on the underside of the printed circuit board 4, the thermal energy being dissipated via the rear side of the printed circuit board 4 (Fig. 4). The encapsulation material 7 as described with reference to Fig. 6 is not absolutely essential here.

The plate 14 is configured and arranged in such a way that air gaps and leakage paths to live components as specified in the relevant International Electrotechnical Commission (IEC) standard (dependent on the voltage level being used in the given case) are observed between the metal parts of the plate 14, or the heat sink 15, and live parts of the intermediate connection arrangement 3. In particular, the layer 17 is suitably configured and dimensioned to ensure this.

In Fig. 12, the connector housing 2 is provided with a connector housing cover 16, which closes off the connector housing 2 in an upper area of the connector housing 2 from the outside thereof. The connector housing cover 16 is held on to the connector housing 2 by catches 18. A thermal-conduction through-hole 27 is provided in the connector housing cover 16, consequently in the connector housing 2 as a whole, for the passage of a thermal conductor 19, which is connected to the plate 14 and the external heat sink 15 (Fig. 11), to dissipate the thermal energy absorbed by the plate 14 to the outside of the connector housing via the cooling ribs of the heat sink 15.

Further, aspects of the invention may include one or more of the following embodiments:
According to one embodiment, the substrate arrangement has a plate type configuration. In a further embodiment, the electrical conductor structure comprises at least part of the thermal conduction structure. In a further aspect, the thermal conduction structure may be arranged separately from the substrate arrangement. In an embodiment, the substrate arrangement comprises a printed circuit board, wherein the conductor structure comprises tracks applied to the printed circuit board. In an embodiment, the substrate arrangement comprises a punched grid having a plurality of mutually separate punched-grid members. In a further aspect, a plurality of diodes are provided, which are connected to the electrical conductor structure, wherein at least two of the diodes are connected in parallel with each other. According to a further embodiment, a plurality of diodes are provided, which are connected to the electrical conductor structure, wherein at least two of the diodes are arranged mutually offset in a plane of the intermediate connection arrangement.

## Claims

1. Connection device for connecting at least one electrical conductor (13) to at least one connecting lead (11, 12), comprising:
a connector housing (2) having at least one connecting-lead through-hole (21, 22) for the connecting lead (11, 12), and at least one conductor through-hole (23, 24) for the electrical conductor (13),
an intermediate connection arrangement (3) arranged in the connector housing (2) having a first connection area (31) for connecting the connecting lead (11, 12) and a second connection area (32) for connecting the electrical conductor (13),
in which the intermediate connection arrangement (3) comprises a thermal conduction structure (7, 10, 14, 41, 45, 61), at least one diode (5) and a substrate arrangement (4, 6) having an electrical conductor structure (41, 61),
in which the diode (5) is configured as a flat diode having two substantially flat opposing main faces (51, 52), the diode being connected to the electrical conductor structure (41, 61), and being connected to the thermal conduction structure (7, 10, 14, 41, 45, 61) by at least one of its main faces (52), wherein the electrical conductor structure (41, 61) is configured for the electrical connection of the first connection area (31) and the second connection area (32), and the thermal conduction structure (7, 10, 14, 41, 45, 61) is configured to dissipate thermal energy from the diode (5),
**characterized in that** the thermal conduction structure (7, 10, 14) is arranged in the connector housing (2) and at least one thermal-conduction through-hole (25, 27) is provided in the connector housing (2) for the passage of a thermal conductor (9, 15), which is connected to the thermal conduction structure, to dissipate the thermal energy to an outside the connector housing.

2. Connection device according to claim 1, wherein the connection device (1) is configured for the electrical connection of a solar module (100) to the connecting lead (11, 12), the second connection area (32) being connected to an electrical contact-making area (3) of at least one solar cell (102) of the solar module.

3. Connection device according to claim 1 or 2, wherein an encapsulation material (7) enclosing the diode (5) is provided in such a way that it makes contact with the diode and absorbs thermal energy from the diode.

4. Connection device according to claim 3, wherein the encapsulation material (7) is formed as a thermoplastic polymer.

5. Connection device according to any of claims 1 to 4, wherein
the thermal conduction structure (41, 45) is arranged on at least two different sides (4-1, 4-2) of the substrate arrangement (4), forming a first partial thermal conduction structure (41) on a first side (4-1) of the substrate arrangement, and a second partial thermal conduction structure (45) on a second side (4-2) of the substrate arrangement,
wherein the diode (5) is connected to the first partial thermal conduction structure (41),
the thermal conduction structure (41, 45) has a plated-through hole (44) through the substrate arrangement (4) in order to connect the first partial thermal conduction structure (41) to the second partial thermal conduction structure (45).

6. Connection device according to any of claims 1 to 5, wherein the thermal conduction structure (7, 10, 14) is connected to at least one external heat sink (9, 15) for dissipating thermal energy to outside the connector housing.

7. Connection device according to claim 6, wherein the thermal conduction structure comprises a plate (10, 14), which covers the intermediate connection arrangement (3) at least partially, and which is connected to the external heat sink (9, 15).

8. Connection device according to claim 7, wherein a thermal conduction structure (17) that is not an electrical conductor is arranged between the substrate arrangement (4) and the plate device (14).

9. Connection device according to any of claims 1 to 8, wherein the thermal conductor (19) is not an electrical conductor.

10. Connection device according to any of claims 1 to 9, wherein the diode (5) and an encapsulation material (7) enclosing the diode are arranged on the substrate arrangement (4), and at least part of the thermal conduction structure (10), which is arranged separately from the substrate arrangement (4), is embedded in the encapsulation material (7).

11. Connection device according to any of claims 1 to 10, wherein the thermal conduction structure (10, 14) is configured as a metal plate.

12. Connection device according to any of claims 1 to 11, wherein the substrate arrangement (4, 6) comprises at least one dimensionally stable planar conductor (43, 63), which is configured to provide a flat contact surface for at least one foil-type connection area (13) of the electrical conductor.

13. Method for manufacturing a connection device according to any of the preceding claims, wherein the diode (5) is mounted on the intermediate connection arrangement (3), the intermediate connection arrangement is then enclosed by an encapsulation material (7) and the intermediate connection arrangement formed in this way is inserted in the connector housing (2).

14. Method according to claim 13, wherein to create the substrate arrangement (6) a punched grid (6) having a plurality of punched-grid members (6-1 to 6-6) is formed from a metal strip, the punched-grid members of said punched grid being initially interconnected by connecting webs (64), and after mounting the diode (5) and applying the encapsulation material (7), the connecting webs (64) are cut through.

15. Solar module, comprising
a connection device (1) according to any of claims 1 to 12 and at least one solar cell (102),
wherein the first connection area (31) of the connection device is connected to a connecting lead (11, 12) for external connection of the solar module (100),
wherein the second connection area (32) of the connection device is connected to an electrical contact-making area (13) of the solar cell.

## Patentansprüche

1. Verbindungsvorrichtung für das Verbinden von mindestens einem elektrischen Leiter (13) mit mindestens einer Anschlussleitung (11, 12), die aufweist:
ein Verbindergehäuse (2) mit mindestens einem Anschlussleitungsdurchgangsloch (21, 22) für die Anschlussleitung (11, 12) und mindestens einem Leiterdurchgangsloch (23, 24) für den elektrischen Leiter (13);
eine Zwischenverbindungsanordnung (3), im Verbindergehäuse (2) angeordnet, mit einem ersten Verbindungsbereich (31) für das Verbinden der Anschlussleitung (11, 12) und einem zweiten Verbindungsbereich (32) für das Verbinden des elektrischen Leiters (13),
wobei die Zwischenverbindungsanordnung (3) eine Wärmeleitungsstruktur (7, 10, 14, 41, 45, 61), mindestens eine Diode (5) und eine Trägermaterialanordnung (4, 6) mit einer elektrischen Leiterstruktur (41, 61) aufweist, wobei die Diode (5) als eine flache Diode mit zwei im Wesentlichen flachen entgegengesetzten Hauptflächen (51, 52) ausgebildet ist, wobei die Diode mit der elektrischen Leiterstruktur (41, 61) verbunden ist und mit der Wärmeleitungsstruktur (7, 10, 14, 41, 45, 61) mittels mindestens einer ihrer Hauptflächen (52) verbunden ist, wobei die elektrische Leiterstruktur (41, 61) für eine elektrische Verbindung des ersten Verbindungsbereiches (31) und des zweiten Verbindungsbereiches (32) ausgebildet ist, und wobei die Wärmeleitungsstruktur (7, 10, 14, 41, 45, 61) ausgebildet ist, um Wärmeenergie von der Diode (5) abzuleiten,
**dadurch gekennzeichnet, dass** die Wärmeleitungsstruktur (7, 10, 14) im Verbindergehäuse (2) angeordnet ist, und dass mindestens ein Wärmeleitungsdurchgangsloch (25, 27) im Verbindergehäuse (2) für den Durchgang eines Wärmeleiters (9, 15) bereitgestellt wird, der mit der Wärmeleitungsstruktur verbunden ist, um die Wärmeenergie nach außerhalb des Verbindergehäuses abzuleiten.

2. Verbindungsvorrichtung nach Anspruch 1, bei der die Verbindungsvorrichtung (1) für die elektrische Verbindung eines Solarmoduls (100) mit der Anschlussleitung (11, 12) ausgebildet ist, wobei der zweite Verbindungsbereich (32) mit einem elektrischen Kontaktgabebereich (3) von mindestens einer Solarzelle (102) des Solarmoduls verbunden ist.

3. Verbindungsvorrichtung nach Anspruch 1 oder 2, bei der ein Umhüllungsmaterial (7), das die Diode (5) einschließt, in einer derartigen Weise bereitgestellt wird, dass es einen Kontakt mit der Diode herstellt und Wärmeenergie von der Diode absorbiert.

4. Verbindungsvorrichtung nach Anspruch 3, bei der das Umhüllungsmaterial (7) als ein thermoplastisches Polymer ausgebildet ist.

5. Verbindungsvorrichtung nach einem der Ansprüche 1 bis 4, bei der die Wärmeleitungsstruktur (41, 45) auf mindestens zwei verschiedenen Seiten (4-1, 4-2) der Trägermaterialanordnung (4) angeordnet ist, wobei eine erste Teilwärmeleitungsstruktur (41) auf einer ersten Seite (4-1) der Trägermaterialanordnung und eine zweite Teilwärmeleitungsstruktur (45) auf einer zweiten Seite (4-2) der Trägermaterialanordnung ausgebildet ist,
wobei die Diode (5) mit der ersten Teilwärmeleitungsstruktur (41) verbunden ist, wobei die Wärmeleitungsstruktur (41, 45) ein durchkontaktiertes Loch (44) durch die Trägermaterialanordnung (4) aufweist, um die erste Teilwärmeleitungsstruktur (41) mit der zweiten Teilwärmeleitungsstruktur (45) zu verbinden.

6. Verbindungsvorrichtung nach einem der Ansprüche 1 bis 5, bei der die Wärmeleitungsstruktur (7, 10, 14) mit mindestens einem externen Wärmeableiter (9, 15) für das Ableiten von Wärmeenergie nach außerhalb des Verbindergehäuses verbunden ist.

7. Verbindungsvorrichtung nach Anspruch 6, bei der die Wärmeleitungsstruktur eine Platte (10, 14) aufweist, die die Zwischenverbindungsanordnung (3) mindestens teilweise bedeckt, und die mit dem externen Wärmeableiter (9, 15) verbunden ist.

8. Verbindungsvorrichtung nach Anspruch 7, bei der eine Wärmeleitungsstruktur (17), die nicht ein elektrischer Leiter ist, zwischen der Trägermaterialanordnung (4) und der Plattenvorrichtung (14) angeordnet ist.

9. Verbindungsvorrichtung nach einem der Ansprüche 1 bis 8, bei der der Wärmeleiter (19) nicht ein elektrischer Leiter ist.

10. Verbindungsvorrichtung nach einem der Ansprüche 1 bis 9, bei der die Diode (5) und ein Umhüllungsmaterial (7), das die Diode einschließt, auf der Trägermaterialanordnung (4) angeordnet sind und mindestens ein Teil der Wärmeleitungsstruktur (10), der separat von der Trägermaterialanordnung (4) angeordnet ist, im Umhüllungsmaterial (7) eingebettet ist.

11. Verbindungsvorrichtung nach einem der Ansprüche 1 bis 10, bei der die Wärmeleitungsstruktur (10, 14) als eine Metallplatte ausgebildet ist.

12. Verbindungsvorrichtung nach einem der Ansprüche 1 bis 11, bei der die Trägermaterialanordnung (4, 6) mindestens einen dimensionsstabilen ebenen Leiter (43, 63) aufweist, der ausgebildet ist, um eine flache Kontaktfläche für mindestens einen Folienverbindungsbereich (13) des elektrischen Leiters bereitzustellen.

13. Verfahren zur Herstellung einer Verbindungsvorrichtung nach einem der vorhergehenden Ansprüche, bei dem die Diode (5) auf der Zwischenverbindungsanordnung (3) montiert ist, wobei die Zwischenverbindungsanordnung dann mittels eines Umhüllungsmaterials (7) eingeschlossen wird und die auf diese Weise gebildete Zwischenverbindungsanordnung in das Verbindergehäuse (2) eingesetzt wird.

14. Verfahren nach Anspruch 13, bei dem, um die Trägermaterialanordnung (6) zu bilden, ein gestanztes Gitter (6) mit einer Vielzahl von gestanzten Gitterelementen (6-1 bis 6-6) aus einem Metallstreifen gebildet wird, wobei die gestanzten Gitterelemente des gestanzten Gitters anfangs durch Verbindungsstege (64) miteinander verbunden sind, und wobei nach dem Montieren der Diode (5) und dem Aufbringen des Umhüllungsmaterials (7) die Verbindungsstege (64) durchgeschnitten werden.

15. Solarmodul, der aufweist:
eine Verbindungsvorrichtung (1) nach einem der Ansprüche 1 bis 12 und mindestens eine Solarzelle (102),
wobei der erste Verbindungsbereich (31) der Verbindungsvorrichtung mit einer Anschlussleitung (11, 12) für einen externen Anschluss des Solarmoduls (100) verbunden ist,
wobei der zweite Verbindungsbereich (32) der Verbindungsvorrichtung mit einem elektrischen Kontaktgabebereich (13) der Solarzelle verbunden ist.

## Revendications

1. Dispositif de connexion, pour connecter au moins un conducteur électrique (13) à au moins un fil de raccordement (11, 12), comprenant :
un boîtier de connecteur (2), comportant au moins un trou de passage du fil de raccordement (21, 22) pour le fil de raccordement (11, 12) et au moins un trou de passage du conducteur (23, 24) pour le conducteur électrique (13) ;
un assemblage de connexion intermédiaire (3) agencé dans le boîtier du connecteur (2), comportant une première zone de connexion (31) pour connecter le fil de raccordement (11, 12) et une deuxième zone de connexion (32) pour connecter le conducteur électrique (13) ;
l'assemblage de connexion intermédiaire (3) comprenant une structure de conduction thermique (7, 10, 14, 41, 45, 61), au moins une diode (5) et un assemblage de substrat (4, 6), comportant une structure de conducteur électrique (41, 61), la diode (5) ayant la configuration d'une diode plate, comportant deux faces principales opposées pratiquement plates (51, 52), la diode étant connectée à la structure de conducteur électrique (41, 61) et étant connectée à la structure de conduction thermique (7, 19, 14, 41, 45, 61) par au moins une de ses faces principales (52), la structure de conducteur électrique (41, 61) étant configurée de sorte à assurer la connexion électrique de la première zone de connexion (31) et de la deuxième zone de connexion (32), la structure de conduction thermique (7, 10, 14, 41, 45, 61) étant configurée de sorte à assurer la dissipation de l'énergie thermique de la diode (5) ;
**caractérisé en ce que** la structure de conduction thermique (7, 10, 14) est agencée dans le boîtier du connecteur (2), au moins un trou de passage de conduction thermique (25, 27) étant formé dans le boîtier du connecteur (2) pour permettre le passage d'un conducteur thermique (9, 15) connecté à la structure de conduction thermique, pour dissiper l'énergie thermique vers l'extérieur du boîtier du connecteur.

2. Dispositif de connexion selon la revendication 1, dans lequel le dispositif de connexion (1) est configuré de sorte à assurer la connexion électrique d'un module solaire (100) au fil de raccordement (11, 12), la deuxième zone de connexion (32) étant connectée à une zone d'établissement d'un contact électrique (3) d'au moins une cellule solaire (102) du module solaire.

3. Dispositif de connexion selon les revendications 1 ou 2, dans lequel un matériau d'encapsulation (7) renfermant la diode (5) est agencé de sorte à établir un contact avec la diode et à absorber l'énergie thermique de la diode.

4. Dispositif de connexion selon la revendication 3, dans lequel le matériau d'encapsulation (7) est formé à partir d'un polymère thermoplastique.

5. Dispositif de connexion selon l'une quelconque des revendications 1 à 4, dans lequel
la structure de conduction thermique (41, 45) est agencée sur au moins deux côtés différents (4-1, 4-2) de l'assemblage de substrat (4), formant une première structure de conduction thermique partielle (41) sur un premier côté (4-1) de l'assemblage de substrat, et une deuxième structure de conduction thermique partielle (45) sur le deuxième côté (4-2) de l'assemblage de substrat ;
la diode (5) étant connectée à la première structure de conduction thermique partielle (41) ;
la structure de conduction thermique (41, 45) comportant un trou métallisé (44) traversant l'assemblage de substrat (4) en vue de connecter la première structure de conduction thermique partielle (41) à la deuxième structure de conduction thermique partielle (45).

6. Dispositif de connexion selon l'une quelconque des revendications 1 à 5, dans lequel la structure de conduction thermique (7, 10, 14) est connectée à au moins un dissipateur de chaleur externe (9, 15) pour dissiper l'énergie thermique vers l'extérieur du boîtier du connecteur.

7. Dispositif de connexion selon la revendication 6, dans lequel la structure de conduction thermique comprend une plaque (10, 14) recouvrant au moins partiellement l'assemblage de connexion intermédiaire (3) et connectée au dissipateur thermique externe (9, 15).

8. Dispositif de connexion selon la revendication 7, dans lequel une structure de conduction thermique (17), non constituée par un conducteur électrique, est agencée entre l'assemblage de substrat (4) et le dispositif de plaque (14).

9. Dispositif de connexion électrique selon l'une quelconque des revendications 1 à 8, dans lequel le conducteur thermique (19) n'est pas constitué par un conducteur électrique.

10. Dispositif de connexion selon l'une quelconque des revendications 1 à 9, dans lequel la diode (5) et un matériau d'encapsulation (7) renfermant la diode sont agencés sur l'assemblage de substrat (4), au moins une partie de la structure de conduction thermique (10), agencée séparément de l'assemblage de substrat (4), étant noyée dans le matériau d'encapsulation (7).

11. Dispositif de connexion selon l'une quelconque des revendications 1 à 10, dans lequel la structure de conduction thermique (10, 14) est configurée sous forme d'une plaque métallique.

12. Dispositif de connexion selon l'une quelconque des revendications 1 à 11, dans lequel l'assemblage de substrat (4, 6) comprend au moins un conducteur plan à stabilité dimensionnelle (43, 63), configuré de sorte à établir une surface de contact plate pour au moins une zone de connexion de type feuille (13) du conducteur électrique.

13. Procédé de fabrication d'un dispositif de connexion selon l'une quelconque des revendications précédentes, dans lequel la diode (5) est montée sur l'assemblage de connexion intermédiaire (3), l'assemblage de connexion intermédiaire étant ensuite renfermé dans un matériau d'encapsulation (7) et l'assemblage de connexion intermédiaire ainsi formé étant inséré dans le boîtier du connecteur (2).

14. Procédé selon la revendication 13, dans lequel, en vue de former l'assemblage de substrat (6), une grille perforée (6) comportant plusieurs éléments de grille perforée (6-1 à 6-6) est formée à partir d'une bande métallique, les éléments de grille perforée de ladite grille perforée étant initialement interconnectés par des bandes de connexion (64), les bandes de connexion (64) étant découpées après le montage de la diode (5) et l'application du matériau d'encapsulation (7).

15. Module solaire, comprenant:
un dispositif de connexion (1) selon l'une quelconque des revendications 1 à 12 et au moins une cellule solaire (102) ;
la première zone de connexion (31) du dispositif de connexion étant connectée à un fil de raccordement (11, 12) en vue de la connexion externe du module solaire (100) ;
la deuxième zone de connexion (32) du dispositif de connexion étant connectée à une zone d'établissement d'un contact électrique (13) de la cellule solaire.
